# EUROPEAN PATENT APPLICATION

(11) **EP 4 503 561 A1**
(43) Date of publication of application: **05.02.2025**
(21) Application number: 23881806.6
(22) Date of filing: 24.10.2023
(51) Int. Cl.: H04L 47/20

(54) **NETWORK INFORMATION OPENING METHOD AND RELATED DEVICE**

(30) Priority: 26.10.2022 CN 202211319701
(71) Applicant: Tencent Technology (Shenzhen) Company Limited, Shenzhen, Guangdong 518057 (CN)
(72) Inventor: ZHANG, Zhuoyun, Shenzhen, Guangdong 518057 (CN)
(74) Representative: AWA Sweden AB
(86) International application number: PCT/CN2023/126080
(87) International publication number: WO 2024/088228

(57) **Abstract**

The embodiments of the present disclosure belong to the technical field of communications. Provided are a network information opening method and a related device. The method is executed by a policy control function network element. The method comprises: receiving a congestion information opening request; in response to the congestion information opening request, determining a first network device congestion information opening mode according to congestion policy configuration information of a network device; and sending a first network device congestion information opening subscription message, wherein the first network device congestion information opening subscription message carries information indicating the first network device congestion information opening mode.

## Description

### RELATED APPLICATION

The present disclosure claims priority to Chinese Patent Application No. 202211319701.2, filed with the China National Intellectual Property Administration on October 26, 2022 and entitled "NETWORK INFORMATION EXPOSURE METHOD AN RELATED DEVICE", which is incorporated herein by reference in its entirety.

### FIELD OF THE TECHNOLOGY

The present disclosure relates to the field of communication technologies, and , to a network information exposure method, a communication device, a computer-readable storage medium, and a computer program product.

### BACKGROUND OF THE DISCLOSURE

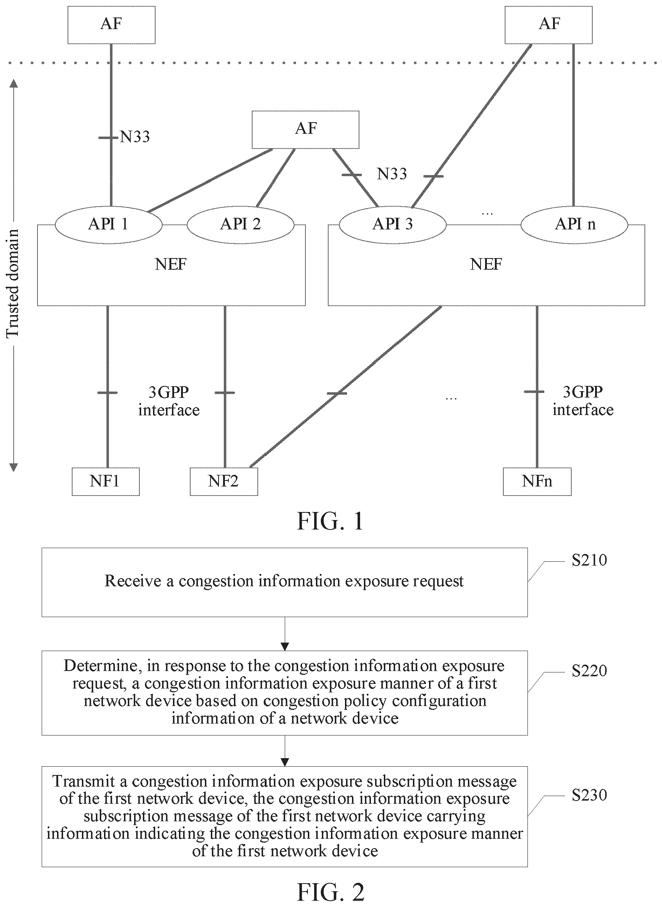

FIG. 1 is a schematic diagram of a 5^{th} generation mobile communication technology (5G) network capability exposure architecture. As shown in FIG. 1, a network exposure object (NEO) (or "network exposure function" (NEF)) interacts with an application object (AO) (or "application function" (AF)) via corresponding application program interfaces (APIs) (such as an API 1, an API 2, an API 3, ..., and an API n shown in FIG. 1, where n is a positive integer greater than or equal to 1) and an N33 interface, to obtain a capability call request of the AF, and exposes corresponding information to the AF based on the capability call request. The NEF interacts with other network objects (NOs) (or "network functions" (NFs)) (such as an NF1, an NF2, ..., and an NFn shown in FIG. 1, where n is a positive integer greater than or equal to 1) of a 5G core network control plane via service interfaces (such as a 3^{rd} Generation partnership project (3GPP) interface as shown in FIG. 1) to obtain network information used by the AF.

### SUMMARY

Embodiments of the present disclosure provide a network information exposure method, a communication device, a computer-readable storage medium, and a computer program product, such that a congestion information exposure manner of a network device may be determined based on capability information of the network device.

An embodiment of the present disclosure provides a network information exposure method. The method is performed by a core network function, and includes: receiving a congestion information exposure request; determining, in response to the congestion information exposure request, a congestion information exposure manner of a first network device based on congestion policy configuration information of a network device; and transmitting a congestion information exposure subscription message of the first network device, the congestion information exposure subscription message of the first network device carrying information indicating the congestion information exposure manner of the first network device.

An embodiment of the present disclosure provides a network information exposure method. The method is performed by a network device, and includes: obtaining a congestion information exposure subscription message of a first network device, the congestion information exposure subscription message of the first network device carrying information indicating a congestion information exposure manner of the first network device, and the congestion information exposure manner of the first network device being determined, in response to a received congestion information exposure request, by a core network function based on congestion policy configuration information of a network device; detecting that a network is congested; and using the congestion information exposure manner of the first network device to expose congestion information.

An embodiment of the present disclosure provides a network information exposure method. The method is performed by a target network device, and includes: obtaining a congestion information exposure subscription message of a first network device, the congestion information exposure subscription message of the first network device carrying information indicating a congestion information exposure manner of the first network device, and the congestion information exposure manner of the first network device being determined, in response to a received congestion information exposure request, by a core network function based on congestion policy configuration information of a network device; determining, based on capability information of the target network device, whether the congestion information exposure manner of the first network device is supported; transmitting a rejection message if the congestion information exposure manner of the first network device is not supported; and receiving a congestion information exposure subscription message of a second network device, the congestion information exposure subscription message of the second network device carrying information indicating a congestion information exposure manner of the second network device, the congestion information exposure manner of the second network device being determined based on congestion policy configuration information of the target network device.

An embodiment of the present disclosure provides a network information exposure method. The method is performed by a user plane function, and includes: receiving an N4 message, the N4 message carrying information indicating a congestion information reporting manner of the user plane function, the N4 message being transmitted after a core network function determines, in response to a received congestion information exposure request, a congestion information exposure manner of a first network device based on congestion policy configuration information of a network device, and determines that information indicating the congestion information exposure manner of the first network device includes information instructing the network device to generate an uplink data packet including congestion information and transmit, via a data plane, the uplink data packet to the user plane function; receiving the congestion information; and transmitting the congestion information by using the congestion information reporting manner of the user plane function.

An embodiment of the present disclosure provides a core network function, including: a receiving unit, configured to receive a congestion information exposure request; a processing unit, configured to determine, in response to the congestion information exposure request, a congestion information exposure manner of a first network device based on congestion policy configuration information of a network device; and a transmitting unit, configured to transmit a congestion information exposure subscription message of the first network device, the congestion information exposure subscription message of the first network device carrying information indicating the congestion information exposure manner of the first network device.

An embodiment of the present disclosure provides a network device, including: a receiving unit, configured to obtain a congestion information exposure subscription message of a first network device, the congestion information exposure subscription message of the first network device carrying information indicating a congestion information exposure manner of the first network device, and the congestion information exposure manner of the first network device being determined, in response to a received congestion information exposure request, by a core network function based on congestion policy configuration information of a network device; and a processing unit, configured to detect that a network is congested, and the processing unit being further configured to use the congestion information exposure manner of the first network device to expose congestion information.

An embodiment of the present disclosure provides a target network device, including: a receiving unit, configured to obtain a congestion information exposure subscription message of a first network device, the congestion information exposure subscription message of the first network device carrying information indicating a congestion information exposure manner of the first network device, and the congestion information exposure manner of the first network device being determined, in response to a received congestion information exposure request, by a core network function based on congestion policy configuration information of a network device; a processing unit, configured to determine, based on capability information of the target network device, whether the congestion information exposure manner of the first network device is supported ; and a transmitting unit, configured to transmit a rejection message if the congestion information exposure manner of the first network device is not supported; The receiving unit is further configured to receive a congestion information exposure subscription message of a second network device. The congestion information exposure subscription message of the second network device carries information indicating a congestion information exposure manner of the second network device. The congestion information exposure manner of the second network device is determined based on congestion policy configuration information of the target network device.

An embodiment of the present disclosure provides a user plane function, including: a receiving unit, configured to receive an N4 message, the N4 message carrying information indicating a congestion information reporting manner of the user plane function, the N4 message being transmitted after a core network function determines, in response to a received congestion information exposure request, a congestion information exposure manner of a first network device based on congestion policy configuration information of a network device, and determines that information indicating the congestion information exposure manner of the first network device includes information instructing the network device to generate an uplink data packet including congestion information and transmit, via a data plane, the uplink data packet to the user plane function; the receiving unit being further configured to receive the congestion information; and a transmitting unit, configured to transmit the congestion information by using the congestion information reporting manner of the user plane function.

An embodiment of the present disclosure provides a communication device, including: one or more processors; and a memory, configured to store one or more programs, the one or more programs, when executed by the one or more processors, enabling the communication device to implement the network information exposure method in embodiments of the present disclosure.

An embodiment of the present disclosure provides a computer-readable storage medium, having a computer program stored thereon, the computer program, when runs on a computer, enabling the computer to perform the network information exposure method in embodiments of the present disclosure.

An embodiment of the present disclosure provides a computer program product, including a computer program, the computer program, when executed by a computer, implementing the network information exposure method in embodiments of the present disclosure.

### BRIEF DESCRIPTION OF THE DRAWINGS

FIG. 1 is a schematic diagram of a 5G network capability exposure architecture .
FIG. 2 is a flowchart of a network information exposure method according to some embodiments of the present disclosure.
FIG. 3 is a flowchart of a network information exposure method according to some other embodiments of the present disclosure.
FIG. 4 is a flowchart of a network information exposure method according to still some other embodiments of the present disclosure.
FIG. 5 is a schematic diagram of interaction of a network information exposure method according to some embodiments of the present disclosure.
FIG. 6 is a flowchart of a network information exposure method according to yet some embodiments of the present disclosure.
FIG. 7 is a flowchart of a network information exposure method according to yet some embodiments of the present disclosure.
FIG. 8 is a flowchart of a network information exposure method according to yet some embodiments of the present disclosure.
FIG. 9 is a block diagram of a policy control function according to some embodiments of the present disclosure.
FIG. 10 is a block diagram of a network device according to some embodiments of the present disclosure.
FIG. 11 is a block diagram of a target network device according to some embodiments of the present disclosure.
FIG. 12 is a block diagram of a user plane function according to some embodiments of the present disclosure.
FIG. 13 is a schematic diagram of a structure of a communication device according to some embodiments of the present disclosure.

### DESCRIPTION OF EMBODIMENTS

To make the objects, technical solutions, and advantages of the present disclosure more apparent, example embodiments of the present disclosure are described in detail below with reference to accompanying drawings. Throughout the accompanying drawings, a same reference numeral is always used to represent a same component. Embodiments described herein are illustrative only and are not to be construed to limit the scope of the present disclosure.

The technical solutions of embodiments of the present disclosure may be applied to various communication systems, such as: a global system for mobile communications (GSM), a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD), a universal mobile telecommunications system (UMTS), a worldwide interoperability for microwave access (WiMAX) communication system, a 5G system, or a future evolved mobile communication system.

The terms "system" and "network" may be used interchangeably herein. The term "and/or" used herein describes only an association relationship for describing associated objects and represents that three relationships may exist. For example, A and/or B may represent the following three cases: only A exists, both A and B exist, and only B exists.

Firstly, some terms involved in embodiments of the present disclosure are explained.

RAN: Radio access network.

UPF: User plane function.

AMF: Access and mobility management function.

SMF: Session management function.

PCF: Policy control function.

UE: User equipment.

"Network capability exposure" and "capability exposure" mentioned in embodiments of the present disclosure refer to abstracting and exposing a capability of a network (such as a 5G network, but is not limited thereto), and may implement friendly intercommunication and mutually beneficial cooperation between an operator network and a third-party service provider, and meeting a capability to richly and flexibly expose a mobile network to a third party.

The capability exposure supports external exposure of a network capability. Externally exposed service capabilities, for example, may include but are not limited to as follows.
(1) Network detection capability exposure: Refers to that a network provides a capability to detect a congestion status of an area of the network or detect a movement range of a terminal for a third party, and exposes detection event information to the outside by using an NEF.
(2) Network basic service capability exposure: Refers to that a network provides capabilities such as a basic short message, a voice, and charging for a third party.
(3) Network control capability exposure: Refers to that a network provides a capability to guarantee quality of service (QoS) for the third party.
(4) Network information capability exposure: Refers to that a network provides internal network information including such as a real-time terminal connection attribute, terminal location information, non-real-time big data analysis information, to a third party.
(5) Network slice orchestration and management capability exposure: Refers to that a network exposes a life cycle management capability of a network slice for a third party.
(6) Reverse capability exposure: Refers to that a third party may expose valuable information to a mobile network for network optimization and management, such as a terminal communication mode and mobility information.

In development of a data packet (such as a multimedia data packet) transmission technology, a service server may combine information and a status of network transmission to adapt and adjust a code rate, adjust a video resolution, and the like. Therefore, real-time exposure network information is a very important research direction. An embodiment of the present disclosure provides a network information exposure method that may be applied to effectively expose congestion information in network information and satisfy an application layer processing condition.

In the embodiments of the present disclosure including the embodiments of both the claims and the specification (hereinafter referred to as "all embodiments of the present disclosure"), a target terminal may be any terminal, and a target service may be any service on the target terminal. Network information refers to any network-side information related to the target service of the target terminal that the network device can obtain, which may include but is not limited to one or a combination of network-side congestion information, a data transmission rate, a packet loss rate, a bit error rate, and the like.

In all embodiments of the present disclosure, congestion information refers to information configured for indicating whether congestion occurs in the network of the target terminal and/or a status based on the congestion occurring (such as a congestion degree or a congestion level), or information configured for indicating whether a transmission channel of the target service of the target terminal is congested and/or a status based on the congestion occurring (such as a congestion degree or a congestion level).

Some manners to expose congestion information of a network device such as a base station are described below.
(1) The base station transmits congestion information to the AMF through an N2 message (the N2 message may include congestion information), the AMF transmits the congestion information to the SMF, and the SMF transmits the congestion information to the PCF. The congestion information is transmitted to the AF by the PCF. The N2 message in all embodiments of the present disclosure refers to a message transmitted on an N2 interface. The N2 interface is an interface between the base station and the AMF. The N2 message may be a message that is already defined in a standard and is transmitted between the base station and the AMF, or may be a newly added message that is transmitted between the base station and the AMF. A name of the N2 message is not limited in all embodiments of the present disclosure.
(2) The base station transmits an uplink data packet to the UPF (where the uplink data packet includes congestion information), and the uplink data packet is transmitted to the AF by the UPF, or transmitted to the AF by the NEF.
(3) The base station marks an explicit congestion notification (ECN) information (the ECN information may indicate occurrence of congestion) in a header of a data packet, and the data packet is finally transmitted to a service server via a user plane.

According to the method provided in all embodiments of the present disclosure, based on the congestion information exposure manners of the foregoing plurality of base stations existing, the exposure manners may be selected and controlled based on the capability information of the network device.

FIG. 2 is a flowchart of a network information exposure method according to an embodiments of the present disclosure. The method provided in this embodiment shown in FIG. 2 may be performed by a core network object (or "core network function"). The core network function may be a policy control object (PCO) (or "policy control function" (PCF)), a session management object (SMO) (or "session management function" (SMF)), or another core network function.

An example in which the core network function is the PCF is used. The following describes the method provided in all embodiments of the present disclosure.

As shown in FIG. 2, the method in this embodiment of the present disclosure may include the following operations.

S210: Receive a congestion information exposure request.

In all embodiments of the present disclosure, the PCF may receive the congestion information exposure request from an AF. The congestion information exposure request refers to a request message transmitted by the AF and configured for requesting congestion information used by the AF. The congestion information exposure request carries user information (such as a user IP address, for example, an IP address of user equipment) and service information (such as a service identifier). The PCF determines a terminal device used by the user based on the user information, to determine a network device connected to the terminal device, and then determine a congestion information exposure manner of the network device based on capability information of the network device. The PCF may further determine, based on the service information, a target service targeted by the congestion information exposure request.

S220: Determine, based on receiving the congestion information exposure request, a congestion information exposure manner of a first network device based on congestion policy configuration information of a network device.

In all embodiments of the present disclosure, the congestion policy configuration information of the network device includes the capability information of the network device. The capability information of the network device is configured for indicating a congestion information exposure manner supported by the network device.

In all embodiments of the present disclosure, the determining a congestion information exposure manner of a first network device based on congestion policy configuration information of a network device may include: determining the congestion information exposure manner of the first network device based on the capability information of the network device.

In all embodiments of the present disclosure, the congestion policy configuration information of the network device further includes an operator policy of the network device and local configuration of the core network function. The operator policy includes a first congestion policy corresponding to the target service. The first congestion policy is configured for indicating a proportion of the target service using each congestion information exposure manner. For example, for congestion information of the target service, 30% of the congestion information uses the congestion information exposure manner described in the foregoing manner (1), 50% of the congestion information uses the congestion information exposure manner described in the foregoing manner (2), and 20% of the congestion information uses the congestion information exposure manner described in the foregoing manner (3). The local configuration of the core network function includes a second congestion policy. The second congestion policy is configured for indicating a priority of each congestion information exposure manner. Based on congestion information exposure being performed, a congestion information exposure manner with a high priority may be selected. The determining a congestion information exposure manner of a first network device based on congestion policy configuration information of a network device may include: determining the congestion information exposure manner of the first network device based on the capability information and the operator policy of the network device, and the local configuration of the policy control function.

In all embodiments of the present disclosure, based on the PCF receiving the congestion information exposure request transmitted by the AF, the PCF may determine, based on factors such as capability information and an operator policy of the network device such as the base station, and the local configuration, a path and method for exposing the congestion information of the network device. The determined path and method for exposing the congestion information of the network device are referred to as the congestion information exposure manner of the first network device.

In all embodiments of the present disclosure, the capability information of the network device refers to capability information about which congestion information the network device to supports.

In all embodiments of the present disclosure, the capability information of the network device may include at least one of the following:
whether the network device supports an explicit congestion notification;
whether the network device has a capability of supporting congestion information reporting of a data plane; and
whether the network device supports reporting the congestion information via a notification process.

For example, the capability information of the base station refers to whether the base station supports the ECN, whether the base station supports the capability of supporting congestion information reporting of a data plane, and whether the base station supports reporting the congestion information via the notification process.

In all embodiments of the present disclosure, the information indicating the congestion information exposure manner of the first network device may include at least one of the following:
information instructing the network device to perform explicit congestion notification marking;
information instructing the network device to generate an uplink data packet including congestion information and transmit, via a data plane, the uplink data packet to a user plane function; and
information instructing the network device to report, via a notification path of a control plane, the congestion information.

For example, the PCF may instruct, by using the congestion information exposure manner of the first network device, the base station to use which manner to report the congestion information. For example, the PCF instructs the base station to perform explicit congestion notification (ECN) marking, or the PCF instructs the base station to transmit, via the data plane, a data packet including congestion information (such as the foregoing uplink data packet) to the UPF, or the PCF instructs the base station to report the congestion information via a notification path of a control plane.

S230: Transmit a congestion information exposure subscription message of the first network device. The congestion information exposure subscription message of the first network device carries information indicating the congestion information exposure manner of the first network device.

In all embodiments of the present disclosure, the transmitting a congestion information exposure subscription message of the first network device may include:
transmitting the congestion information exposure subscription message of the first network device to a session management function to instruct the session management function to transmit the congestion information exposure subscription message of the first network device to an access and mobility management function, the access and mobility management function being configured to transmit the congestion information exposure subscription message of the first network device to the network device through an N2 message; or
transmitting the congestion information exposure subscription message of the first network device to an access and mobility management function to instruct the access and mobility management function to transmit the congestion information exposure manner of the first network device to the network device through an N2 message.

In all embodiments of the present disclosure, the congestion information exposure subscription message of the first network device refers to a message transmitted by the PCF and configured for requesting or subscribing information of the network device, such as the base station, reporting the congestion information.

For example, the PCF may instruct the base station, in a message requesting or subscribing the base station, to use which manner (for example, by carrying information indicating the congestion information exposure manner of the first network device in the congestion information exposure subscription message of the first network device) to report the congestion information. The PCF transmits the congestion information exposure subscription message of the first network device to the AMF by using the SMF, or directly transmits the congestion information exposure subscription message of the first network device to the AMF. The AMF transmits the congestion information exposure subscription message of the first network device to the base station through the N2 message.

In all embodiments of the present disclosure, the terms "transmit", "send", and "receive" may express direct transmitting, sending, and receiving, or indirect transmission, sending, and receiving. For example, the network device may directly or indirectly transmit network information to the AF. "Indirectly" refers to that another network element may be included between the network device and the AF, and the network information is finally forwarded to the AF through forwarding of another network element.

In the network information exposure method provided in all embodiments of the present disclosure, the policy control function may determine the congestion information exposure manner of the first network device based on the congestion policy configuration information of the network device, to be configured for responding to the received congestion information exposure request.

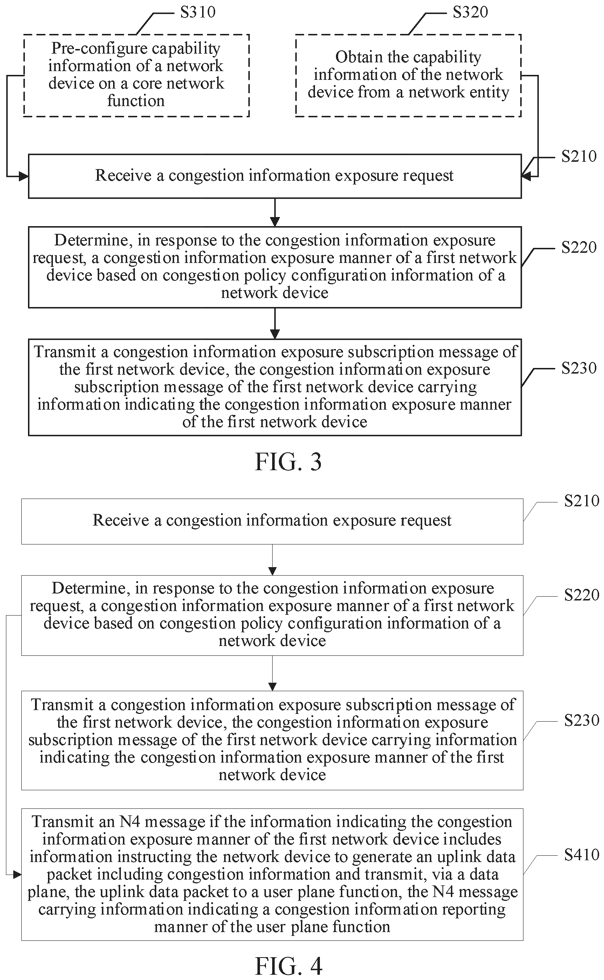

FIG. 3 is a flowchart of a network information exposure method according to an embodiment of the present disclosure. The method provided in this embodiment in FIG. 3 may be performed by a core network function, but the disclosure is not limited thereto.

As shown in FIG. 3, the method in all embodiments of the present disclosure may include the following operations.

In all embodiments of the present disclosure, S310: Pre-configure the capability information of the network device on the core network function.

In all embodiments of the present disclosure, S320: Obtain the capability information of the network device from a network entity.

In all embodiments of the present disclosure, the core network function is a policy control function. The network entity may include at least one of a unified data management entity, a unified data repository entity, a network operation and maintenance system, an access and mobility management function, a session management function, and the like.

S210: Receive a congestion information exposure request.

S220: Determine, based on receiving the congestion information exposure request, a congestion information exposure manner of a first network device based on congestion policy configuration information of a network device.

S230: Transmit a congestion information exposure subscription message of the first network device. The congestion information exposure subscription message of the first network device carries information indicating the congestion information exposure manner of the first network device.

In S230, the PCF may determine the congestion information exposure manner of the first network device based on the capability information of the network device pre-configured on the PCF in S310, or based on the capability information of the network device obtained from the network entity in S320, or based on the capability information and the operator policy of the network device, and the local configuration of the PCF.

In all embodiments of the present disclosure, based on the network device supporting a plurality of congestion information exposure manners, the PCF may select one of the plurality of congestion information exposure manners as the congestion information exposure manner of the first network device. The determining a congestion information exposure manner of a first network device based on congestion policy configuration information of a network device may include: determining, based on the capability information of the network device, at least one congestion information exposure manner supported by the network device; and selecting one congestion information exposure manner from the at least one congestion information exposure manner supported by the network device, and determining the congestion information exposure manner as the congestion information exposure manner of the first network device. For example, a congestion information exposure manner of which proportion does not exceed a preset threshold and has a highest priority may be selected, among congestion information exposure manners supported by the network device, as the congestion information exposure manner of the first network device.

Other content of S210 to S230 may refer to the foregoing embodiment.

According to the network information exposure method provided in all embodiments of the present disclosure, the capability information of the network device such as the base station may be pre-configured on the PCF, stored in UDM/UDR, stored in the network operation and maintenance system, or stored on another network entity in a mobile network. The PCF may obtain the capability information of the base station from a corresponding network entity.

FIG. 4 is a flowchart of a network information exposure method according to an embodiment of the present disclosure. The method provided in this embodiment in FIG. 4 may be performed by a policy control function, but the disclosure is not limited thereto.

As shown in FIG. 4, a difference from the foregoing embodiment shown in FIG. 2 is that the embodiment in FIG. 4 further includes S410: Further transmit an N4 message if the information indicating the congestion information exposure manner of the first network device includes information instructing the network device to generate an uplink data packet including congestion information and transmit, via a data plane, the uplink data packet to a user plane function. The N4 message may carry information indicating a congestion information reporting manner of the user plane function.

An execution sequence between S230 and S410 is not limited in this embodiment of the present disclosure.

In all embodiments of the present disclosure, the information indicating the congestion information reporting manner of the user plane function may include at least one of the following:
information instructing the user plane function to transmit, via an application program interface, the congestion information to a session management function, the session management function being configured to transmit the congestion information to the policy control function, the policy control function being configured to perform a network policy adjustment based on the congestion information or configured to transmit the congestion information to an application function;
information instructing the user plane function to transmit, via the application program interface, the congestion information to the application function; and
information instructing the user plane function to mark an explicit congestion notification of a data packet including the congestion information.

According to the network information exposure method provided in all embodiments of the present disclosure, based on a PCF determining that the network device, such as a base station, reports the congestion information to a UPF by using a data packet of a user plane (such as the foregoing uplink data packet), an SMF or the PCF may further instruct the UPF how to report the congestion information (referred to as the congestion information reporting manner of the user plane function or plane function object). The UPF may include the following two reporting manners.

Manner 1: Based on receiving the data packet including the congestion information (such as the uplink data packet) transmitted by the base station, the UPF may transmit the congestion information to the SMF via an API interface, and then the SMF transmits the congestion information to the PCF. The PCF may perform a network policy adjustment based on the congestion information or transmit the congestion information to an AF. Alternatively, the UPF may directly transmit the congestion information to the AF via the API interface.

Manner 2: Based on the UPF receiving the data packet including the congestion information transmitted by the base station, the UPF marks ECN information in the data packet. Based on marking the ECN information in the data packet, the UPF transmits the data packet based on a normal data packet transmitting process.

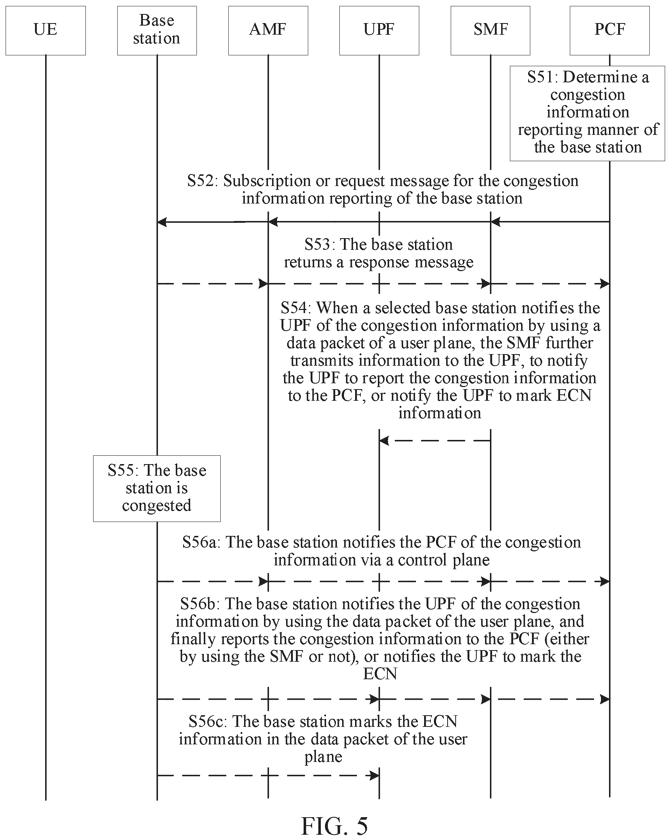

FIG. 5 is a schematic diagram of interaction of a network information exposure method according to an embodiment of the present disclosure. In this embodiment of FIG. 5, an example in which a network device is a base station is used for description, but this is not limited in the present disclosure. As shown in FIG. 5, the method in this embodiment of the present disclosure may include the following operations.

S51: A PCF determines a congestion information reporting manner of the base station.

In all embodiments of the present disclosure, based on the PCF receiving a congestion information exposure request transmitted by an AF, and the PCF accepting the congestion information exposure request, the PCF may determine a terminal device (UE) used by a user based on user information carried in the congestion information exposure request. Information such as capability information and an operator policy of the base station to which the UE is connected (for example, the base station to which the UE accesses) may be considered to determine how the base station to which the UE is connected reports the congestion information, and the determined congestion information reporting manner of the base station is referred to as a congestion information exposure manner of a first network device. If the base station supports an explicit congestion notification, has a capability of supporting congestion information reporting of a data plane, and supports reporting the congestion information via a notification process, the PCF may select one of the following three congestion information exposure manners as the congestion information exposure manner of the first network device.

The base station performs explicit congestion notification marking.

The base station generates an uplink data packet including the congestion information and transmit, via the data plane, the uplink data packet to the AF.

The base station reports the congestion information via a notification path of a control plane.

S52: The PCF may transmit, by using an SMF and an AMF in sequence, a subscription or request message for the congestion information reporting of the base station to the base station.

In all embodiments of the present disclosure, the PCF transmits the subscription or request message for the congestion information reporting to the base station (referred to as a congestion information exposure subscription message of the first network device). In addition to indicating the congestion information reporting manner (for example, the congestion information exposure manner of the first network device determined in S51), the subscription or request message may further indicate a congestion information reporting frequency, a congestion degree reporting threshold, a congestion level, or a congestion degree.

In all embodiments of the present disclosure, the PCF may transmit the congestion information exposure subscription message of the first network device to the SMF, and then the SMF transmits the congestion information exposure subscription message of the first network device to the AMF. Finally, the AMF transmits the congestion information exposure subscription message of the first network device to the base station through an N2 message. The PCF may transmit the congestion information exposure subscription message of the first network device to the AMF, and the AMF transmits the congestion information exposure subscription message of the first network device to base station through an N2 message. A path for transmitting the congestion information exposure subscription message of the first network device to the base station is not limited thereto.

In all embodiments of the present disclosure, S53: The base station may return a response message to the PCF by using the AMF and the SMF in sequence.

In all embodiments of the present disclosure, the base station may return the response message to the PCF based on capability information of the base station.

In all embodiments of the present disclosure, S54: Based on a selected base station notifying the UPF of the congestion information by using a data packet of a user plane, the SMF may further transmit information to the UPF, to notify the UPF to report the congestion information to the PCF, or notify the UPF to mark ECN information.

In all embodiments of the present disclosure, based on the PCF determining that the base station reports the congestion information to the UPF by using the data packet of the user plane, the SMF or the PCF further instructs the UPF how to report the congestion information, and the information instructing the UPF how to report the congestion information is referred to as a congestion information reporting manner of a user plane function.

S55: The base station is congested.

In all embodiments of the present disclosure, based on detecting that the congestion occurs, the base station may report the congestion information based on the congestion information reporting manner (for example, the foregoing congestion information exposure manner the first network device). For example, one of the following manners S56a, S56b, and S56c may be used to report the congestion information.

In all embodiments of the present disclosure, S56a: The base station may notify the PCF of the congestion information via the control plane.

In all embodiments of the present disclosure, the base station may notify the AMF of the congestion information via the control plane and finally transmit the congestion information to the PCF. For example, the base station may notify the PCF of the congestion information by using the AMF and the SMF in sequence.

In all embodiments of the present disclosure, S56b: The base station may notify the UPF of the congestion information by using the data packet of the user plane (the uplink data packet including the congestion information), and finally report the congestion information to the PCF (either by using the SMF or not), or notify the UPF to mark the ECN.

In all embodiments of the present disclosure, the base station may transmit the congestion information to the UPF by using the data packet of the user plane, and the UPF reports the congestion information based on the congestion information reporting manner of the user plane function received in S54.

The base station may notify the PCF of the congestion information by using the UPF and the SMF in sequence.

In all embodiments of the present disclosure, S56c: The base station may mark the ECN information in the data packet of the user plane. The base station may transmit the data packet with the marked ECN information (such as the uplink data packet) to the UPF.

According to the network information exposure method provided in this embodiment of the present disclosure, the congestion information reporting manner of the base station is effectively controlled based on congestion policy configuration information of the base station. Based on the AF receiving the congestion information exposed by the base station to outside, a service server may combine the received congestion information to adapt and adjust a code rate, adjust a video resolution, and the like, to satisfy an application layer processing condition.

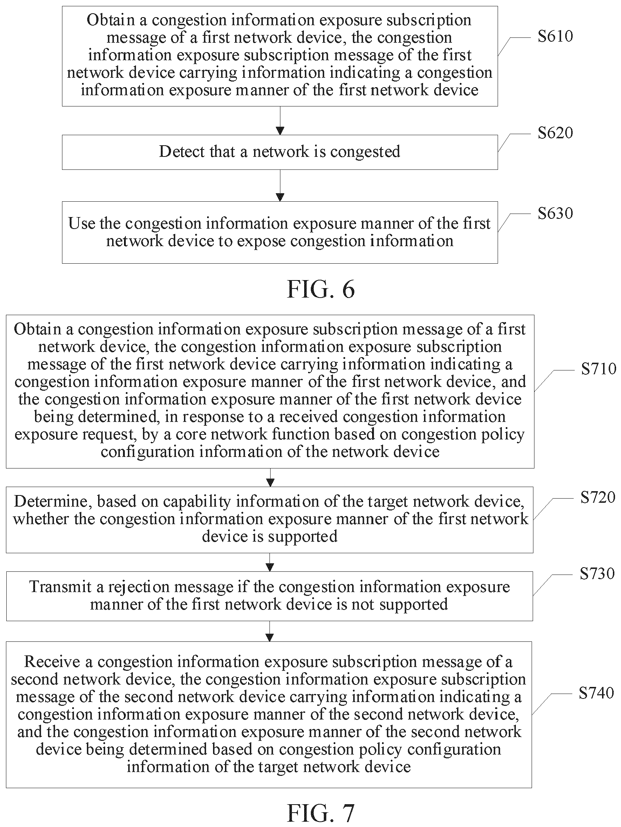

FIG. 6 is a flowchart of a network information exposure method according to yet an embodiment of the present disclosure. The method provided in this embodiment in FIG. 6 may be performed by a network device, and the network device may be a base station.

As shown in FIG. 6, the method in this embodiment of the present disclosure may include the following operations.

S610: Obtain a congestion information exposure subscription message of a first network device, the congestion information exposure subscription message of the first network device carrying information indicating a congestion information exposure manner of the first network device.

In all embodiments of the present disclosure, the congestion information exposure manner of the first network device is determined, based on receiving a congestion information exposure request, by a core network function (such as a PCF) based on congestion policy configuration information of the network device. The congestion information exposure request is transmitted by an AF, and carries user information and service information. The core network function may determine a terminal device used by the user based on the user information, to determine a network device connected to the terminal device, and then determine a congestion information exposure manner of the network device (for example, the congestion information exposure manner of the first network device) based on capability information of the network device. The core network function may further determine, based on the service information, a target service targeted by the congestion information exposure request.

S620: Detect that a network is congested.

S630: Use the congestion information exposure manner of the first network device to expose congestion information.

In all embodiments of the present disclosure, the using the congestion information exposure manner of the first network device to expose congestion information may include: marking explicit congestion notification information in a data packet if the information indicating the congestion information exposure manner of the first network device includes information instructing the network device to perform explicit congestion notification marking.

Based on the PCF determining that the network device such as the base station marks a data packet of a user plane by using an explicit congestion notification, the PCF or an SMF may further instruct a UPF how to report the congestion information. The UPF may include the following two reporting manners.

Manner 1: Based on receiving the data packet including the explicit congestion notification mark transmitted by the network device, the UPF may transmit the congestion information to the SMF via an API interface, and the SMF transmits the congestion information to the PCF. The PCF may finally use the congestion information to perform a network policy adjustment or transmit the congestion information to the AF. The UPF may directly transmit the congestion information to the AF via the API interface.

Manner 2: Based on the UPF receiving the data packet including the explicit congestion notification marking transmitted by the network device, the UPF directly forwards the data packet to the outside without performing any processing on the data packet. If the manner 2 is used, the PCF or the SMF does not need to perform further instructions on the UPF, and the UPF does not need to detect whether the data packet includes the data packet including the explicit congestion notification mark, and only needs to forward the data packet directly.

In all embodiments of the present disclosure, the using the congestion information exposure manner of the first network device to expose congestion information may include: generating, if the information indicating the congestion information exposure manner of the first network device includes information instructing the network device to generate an uplink data packet including the congestion information and transmit, via a data plane, the uplink data packet including the congestion information to a user plane function, an uplink data packet including the congestion information and transmit the uplink data packet to the user plane function to instruct the user plane function to transmit, via an application program interface, the congestion information to an application function.

In all embodiments of the present disclosure, the using the congestion information exposure manner of the first network device to expose congestion information may include: transmitting, if the information indicating the congestion information exposure manner of the first network device includes information instructing the network device to report the congestion information via a notification path of a control plane, the congestion information to an access and mobility management function to instruct the access and mobility management function to transmit the congestion information to a policy control function. The policy control function is configured to perform a network policy adjustment based on the congestion information or configured to transmit the congestion information to an application function.

In all embodiments of the present disclosure, the network device connected to the terminal device may be switched. The network device before switching is referred to as a source network device, and the network device is referred to as a target network device after the switching. The method may further include: Based on the network device connected to the terminal device being switched from the source network device to the target network device, the source network device transmits the congestion information exposure subscription message of the first network device to the target network device.

In all embodiments of the present disclosure, the source network device includes a source base station, and the target network device includes a target base station. For example, if the base station connected to UE is switched, for example, switched from the source base station to the target base station, the source base station may transmit the previously received congestion information reporting request or subscription message (for example, the foregoing congestion information exposure subscription message of the first network device) to the target base station. The target base station may select, based on reporting capability information (for example, capability information of the target network device), whether to accept the congestion information reporting request or subscription message. If the target base station does not support a reporting manner carried in the congestion information reporting request or subscription message (for example, the congestion information exposure manner of the first network device), the target base station transmits a rejection message to the source base station or the AMF, and finally transmits the rejection message to the PCF. The PCF re-determines a congestion information reporting manner (referred to as a congestion information exposure manner of a second network device) based on the congestion policy configuration information of the target base station, and transmits the congestion information reporting manner to the target base station. If the target base station may support the congestion information exposure manner of the second network device, the target base station accepts the congestion information reporting request or subscription message.

Other content in this embodiment in FIG. 6 may refer to the descriptions of the foregoing other embodiments.

FIG. 7 is a flowchart of a network information exposure method according to yet an embodiment of the present disclosure. The method provided in this embodiment in FIG. 7 may be performed by a target network device, but the disclosure is not limited thereto.

As shown in FIG. 7, the method in this embodiment of the present disclosure may include the following operations.

S710: Obtain a congestion information exposure subscription message of a first network device, the congestion information exposure subscription message of the first network device carrying information indicating a congestion information exposure manner of the first network device, and the congestion information exposure manner of the first network device being determined, based on receiving congestion information exposure request, by a core network function based on congestion policy configuration information of the network device.

S720: Determine, based on capability information of the target network device, whether the congestion information exposure manner of the first network device is supported.

S730: Transmit a rejection message if the congestion information exposure manner of the first network device is not supported.

S740: Receive a congestion information exposure subscription message of a second network device, the congestion information exposure subscription message of the second network device including information indicating a congestion information exposure manner of the second network device, and the congestion information exposure manner of the second network device being determined based on congestion policy configuration information of the target network device.

Other content in this embodiment in FIG. 7 may refer to the descriptions of the foregoing other embodiments.

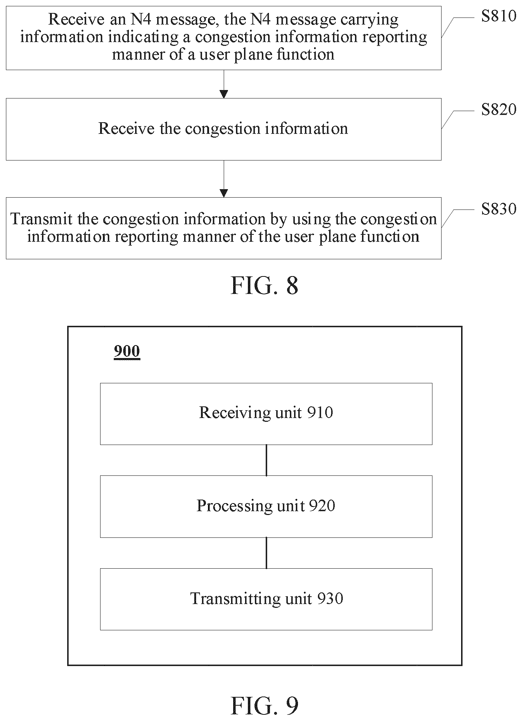

FIG. 8 is a flowchart of a network information exposure method according to yet an embodiment of the present disclosure. The method provided in this embodiment in FIG. 8 may be performed by a user plane function, but the disclosure is not limited thereto.

As shown in FIG. 8, the method in this embodiment of the present disclosure may include the following operations.

S810: Receive an N4 message, the N4 message carrying information indicating a congestion information reporting manner of the user plane function.

In all embodiments of the present disclosure, the N4 message is a message transmitted on an N4 interface. The N4 interface is an interface between an SMF and a UPF. The N4 message may be a specific message that is already defined in a standard and is transmitted between the SMF and the UPF, or may be a newly added message that is transmitted between the SMF and the UPF. A specific name of the N4 message is not limited in all embodiments of the present disclosure.

In all embodiments of the present disclosure, the N4 message is transmitted based on a core network function determining, based on receiving a congestion information exposure request, a congestion information exposure manner of a first network device based on congestion policy configuration information of a network device, and determines that information indicating the congestion information exposure manner of the first network device includes information instructing the network device to generate an uplink data packet including congestion information and transmit, via a data plane, the uplink data packet to the user plane function. The congestion information exposure request is transmitted by an AF and carries user information and service information. The core network function may determine a terminal device used by the user based on the user information, to determine a network device connected to the terminal device, and then determine a congestion information exposure manner of the network device (for example, the congestion information exposure manner of the first network device) based on capability information of the network device. The core network function may further determine, based on the service information, a target service targeted by the congestion information exposure request.

S820: Receive the congestion information.

S830: Transmit the congestion information by using the congestion information reporting manner of the user plane function.

In all embodiments of the present disclosure, the transmitting the congestion information by using the congestion information reporting manner of the user plane function may include:
transmitting, if the congestion information reporting manner of the user plane function includes information instructing the user plane function to transmit, via an application program interface, the congestion information to a session management function network element, the congestion information to the session management function to instruct the session management function to transmit the congestion information to a policy control function, the policy control function being configured to perform a network policy adjustment based on the congestion information or configured to transmit the congestion information to an application function;
transmitting, if the congestion information reporting manner of the user plane function includes information instructing the user plane function to transmit, via an application program interface, the congestion information to an application function, the congestion information to the application function via the application program interface; and
marking, if the congestion information reporting manner of the user plane function includes information indicating the user plane function to mark an explicit congestion notification of a data packet, the explicit congestion notification of the data packet, and transmitting the marked explicit congestion notification of the data packet to a destination server of the data packet.

Other content in this embodiment in FIG. 8 may refer to the descriptions of the foregoing other embodiments.

FIG. 9 is a block diagram of a core network function according to an embodiment of the present disclosure. The core network function 900 provided in this embodiment in FIG. 9 may include a receiving unit 910, a processing unit 920, and a transmitting unit 930.

The receiving unit 910 may be configured to receive a congestion information exposure request.

The processing unit 920 may be configured to determine, based on the congestion information exposure request being received, a congestion information exposure manner of a first network device based on congestion policy configuration information of the network device.

The transmitting unit 930 may be configured to transmit a congestion information exposure subscription message of the first network device. The congestion information exposure subscription message of the first network device carries information indicating the congestion information exposure manner of the first network device.

Other content in this embodiment shown in FIG. 9 may refer to the descriptions of the foregoing other embodiments.

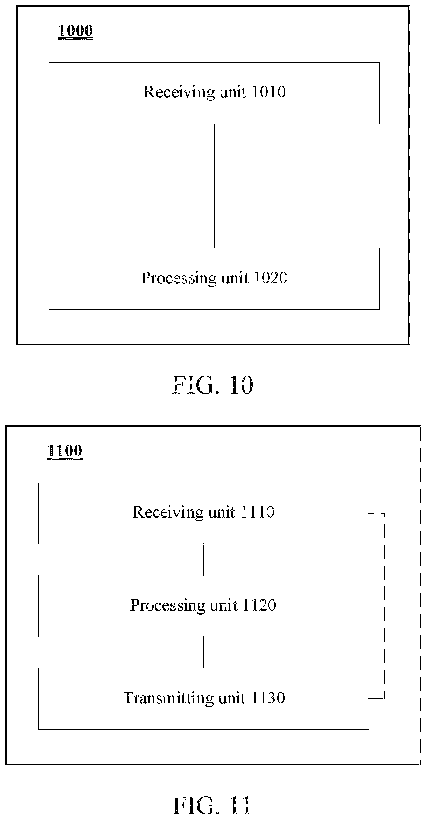

FIG. 10 is a block diagram of a network device according to an embodiment of the present disclosure. The network device 1000 provided in this embodiment in FIG. 10 may include a receiving unit 1010 and a processing unit 1020.

The receiving unit 1010 may be configured to obtain a congestion information exposure subscription message of a first network device. The congestion information exposure subscription message of the first network device carries information indicating a congestion information exposure manner of the first network device.

The processing unit 1020 may be configured to detect that a network is congested.

The processing unit 1020 may be further configured to use the congestion information exposure manner of the first network device to expose congestion information.

Other content in this embodiment shown in FIG. 10 may refer to the descriptions of the foregoing other embodiments.

FIG. 11 is a block diagram of a target network device according to an embodiment of the present disclosure. The target network device 1100 provided in this embodiment in FIG. 11 may include a receiving unit 1110, a processing unit 1120, and a transmitting unit 1130.

The receiving unit 1110 may be configured to obtain a congestion information exposure subscription message of a first network device. The congestion information exposure subscription message of the first network device carries information indicating a congestion information exposure manner of the first network device.

The processing unit 1120 may be configured to determine, based on capability information of the target network device, whether the congestion information exposure manner of the first network device is supported.

The transmitting unit 1130 may be configured to transmit a rejection message if the congestion information exposure manner of the first network device is not supported.

The receiving unit 1110 may be further configured to receive a congestion information exposure subscription message of a second network device. The congestion information exposure subscription message of the second network device carries information indicating a congestion information exposure manner of the second network device. The congestion information exposure manner of the second network device is determined based on congestion policy configuration information of the target network device.

Other content in this embodiment in FIG. 11 may refer to the descriptions of the foregoing other embodiments.

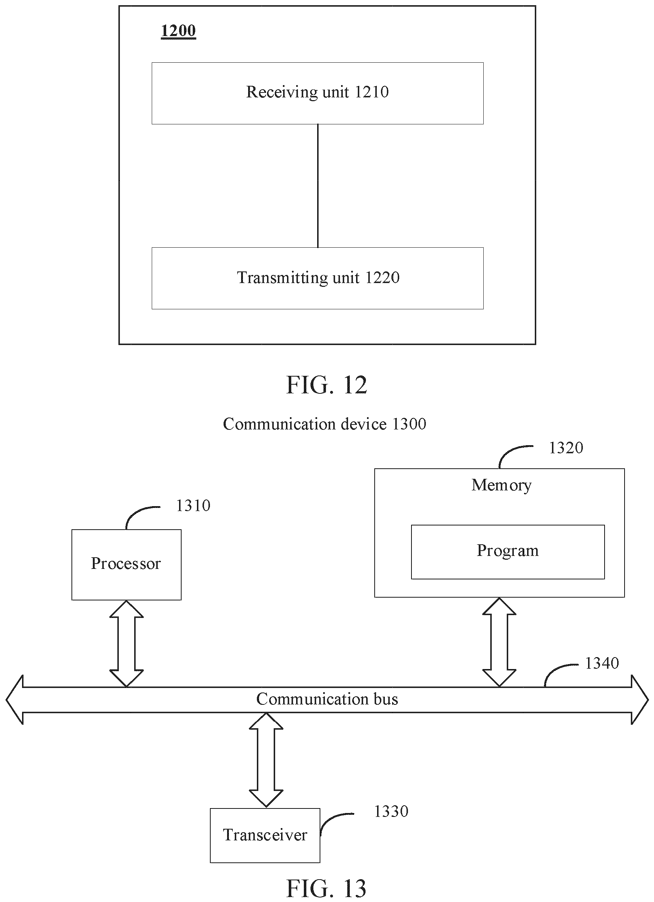

FIG. 12 is a block diagram of a user plane function according to an embodiment of the present disclosure. The user plane function 1200 provided in this embodiment in FIG. 12 may include a receiving unit 1210 and a transmitting unit 1220.

The receiving unit 1210 may be configured to receive an N4 message. The N4 message carries information indicating a congestion information reporting manner of the user plane function. The N4 message is transmitted based on a core network function determining, based on receiving a congestion information exposure request, a congestion information exposure manner of a first network device based on congestion policy configuration information of a network device, and determines that information indicating the congestion information exposure manner of the first network device includes information instructing the network device to generate an uplink data packet including congestion information and transmit, via a data plane, the uplink data packet to the user plane function.

The receiving unit 1210 may be further configured to receive the congestion information.

The transmitting unit 1220 may be further configured to transmit the congestion information by using the congestion information reporting manner of the user plane function.

Other content in this embodiment in FIG. 12 may refer to the descriptions of the foregoing other embodiments.

FIG. 13 is a schematic diagram of a structure of a communication device 1300 according to an embodiment of the present disclosure. The communication device may be a terminal such as UE, a network device such as a base station, or an NEF, an AF, a PCF, an SMF, a UPF, an AMF, and/or the like. The communication device 1300 shown in FIG. 13 includes a processor 1310, and the processor 1310 may call and run a computer program from a memory to implement the method in all embodiments of the present disclosure.

As shown in FIG. 13, the communication device 1300 may include a memory 1320. The processor 1310 may call and run a computer program from the memory 1320 to implement the method in all embodiments of the present disclosure.

The memory 1320 may be a separate component independent of the processor 1310, or may be integrated into the processor 1310.

As shown in FIG. 13, the communication device 1300 may further include a transceiver 1330, and the processor 1310 may control the transceiver 1330 to communicate with another device. The processor 1310 may transmit information or data to another device or receive information or data from another device.

The transceiver 1330 may include a transmitter and a receiver. The transceiver 1330 may further include an antenna, and there may be one or more antennas.

As shown in FIG. 13, the processor 1310, the memory 1320, and the transceiver 1330 may communicate with each other via a communication bus 1340.

The communication device 1300 may include various network elements in all embodiments of the present disclosure, and the communication device 1300 may implement corresponding processes implemented by each network element in various methods in all embodiment of the present disclosure. For brevity, details are not described herein.

The communication device 1300 may be various network devices in all embodiments of the present disclosure specifically and alternatively, and the communication device 1300 may implement corresponding processes implemented by each network device in various methods in all embodiments of the present disclosure. For brevity, details are not described herein.

The processor in this embodiment of the present disclosure may be an integrated circuit chip, and has a signal processing capability. In an implementation process, operations in the foregoing all method embodiments may be implemented by using a hardware integrated logic circuit in the processor or instructions in the form of software.

The processor may include a digital signal processor (DSP), an application specific integrated circuit (ASIC), a field-programmable gate array (FPGA), or another programmable logic device, a discrete gate or transistor logic device, and a discrete hardware component. The methods, operations, and logic block diagrams that are disclosed in all embodiments of the present disclosure may be implemented or performed. The processor may include a microprocessor, or the processor may be any conventional processor, or the like. The operations of the methods disclosed with reference to all embodiments of the present disclosure may be directly performed and completed by using a hardware decoding processor, or may be performed and completed by using a combination of hardware and software modules in the decoding processor. The software module may be located in a storage medium, such as a random access memory, a flash memory, a read-only memory, a programmable read-only memory, an electrically erasable programmable memory, or a register. The storage medium is located in the memory. The processor reads information in the memory and completes the operations of the methods in combination with hardware thereof.

The memory in this embodiment of the present disclosure may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM) serving as an external cache. Through illustrative but not limited description, RAMs in many forms, for example, a static RAM (SRAM), a Dynamic RAM (DRAM), a synchronous DRAM (SDRAM), a double data rate SDRAM (DDR SDRAM), an enhanced SDRAM (ESDRAM), a synchlinkDRAM (SLDRAM), and a direct rambus RAM (DRRAM), are available. The memories of the system and the method described herein are intended to include but are not limited to these and any other suitable types of memories. The foregoing memory is illustratively but not limitedly described.

An embodiment of the present disclosure further provides a computer-readable storage medium for storing a computer program.

The computer-readable storage medium may be used in the network device in embodiments of the present disclosure, and the computer program enables a computer to perform corresponding processes implemented by the network device in various methods of all embodiments of the present disclosure. For brevity, details are not described herein.

The computer-readable storage medium may also be used in various network elements in all embodiments of the present disclosure, and the computer program enables a computer to perform corresponding processes implemented by the network elements in various methods of the all embodiments of the present disclosure. For brevity, details are not described herein.

An embodiment of the present disclosure further provides a computer program product, including computer program instructions.

The computer program product may be used in the network device in all embodiments of the present disclosure, and the computer program instructions enable a computer to perform corresponding processes implemented by the network device in various methods of all embodiments of the present disclosure. For brevity, details are not described herein.

The computer program product may also be used in various network elements in all embodiments of the present disclosure, and the computer program instructions enable a computer to perform corresponding processes implemented by the network elements in various methods of the all embodiments of the present disclosure. For brevity, details are not described herein.

An embodiment of the present disclosure further provides a computer program.

The computer program may be used in the network device in all embodiments of the present disclosure, and the computer program, when runs on a computer, enables a computer to perform corresponding processes implemented by the network device in various methods of all embodiments of the present disclosure. For brevity, details are not described herein.

The computer program may also be used in various network elements in all embodiments of the present disclosure, and the computer program, when runs on a computer, enables a computer to perform corresponding processes implemented by the network elements in various methods of the all embodiments of the present disclosure. For brevity, details are not described herein.

A person of ordinary skill in the art may be aware that the exemplary units and algorithm operations described with reference to all embodiments disclosed in this specification can be implemented in electronic hardware, or a combination of computer software and electronic hardware. Whether the functions are executed in a manner of hardware or software depends on particular applications and design constraint conditions of the technical solutions. A person skilled in the art can use different methods to implement the described functions for each particular application, but it is not to be considered that the implementation goes beyond the scope of all embodiments of the present disclosure.

A person skilled in the art may clearly understand that, for simple and clear description, for specific work processes of the foregoing described system, apparatus, and unit, reference may be made to corresponding process in the foregoing all method embodiments, and details are not described herein again.

In all embodiments provided in the present disclosure, the disclosed system, apparatus, and method may be implemented in other manners. For example, the described apparatus embodiments are merely schematic. For example, the unit division is merely logical function division and may be other division in actual implementation. For example, a plurality of units or components may be combined or integrated into another system, or some features may be ignored or not performed.

The units described as separate parts may or may not be physically separate, and components displayed as units may or may not be physical units, that is, may be located in one position, or may be distributed on a plurality of network units. Some or all of the units may be selected according to actual needs to achieve the objectives of the solutions of all embodiments of the present disclosure.

In addition, functional units in all embodiments of the present disclosure may be integrated into one processing unit, or each of the units may exist alone physically, or two or more units may be integrated into one unit. If implemented in the form of software functional units and sold or used as an independent product, the functions may also be stored in a computer-readable storage medium. Based on such an understanding, the technical solutions of the present disclosure essentially, or the part contributing to the related art, or some of the technical solutions may be implemented in the form of a software product. The computer software product is stored in a storage medium and includes several instructions for instructing a computer device (which may be a personal computer, a server, a network device, or the like) to perform all or some of the operations of the methods described in all embodiments of the present disclosure. The foregoing storage medium includes any medium that may store program code, such as a USB flash drive, a removable hard disk, a read-only memory (ROM), a random access memory (RAM), a magnetic disk, and an optical disc.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the appended claims.

## Claims

1. A network information exposure method, executable by a core network object, the method comprising:
receiving a congestion information exposure request;
determining, based on the congestion information exposure request being received, a first congestion information exposure manner of a first network device based on congestion policy configuration information of a second network device; and
transmitting a congestion information exposure subscription message of the first network device, wherein the congestion information exposure subscription message comprises first information indicating the first congestion information exposure manner of the first network device.

2. The method according to claim 1, wherein the congestion policy configuration information comprises: capability information of the second network device, wherein the capability information of the second network device indicates a second congestion information exposure manner supported by the second network device; and
wherein the determining the first congestion information exposure manner of the first network device based on the congestion policy configuration information of the second network device comprises:
determining the first congestion information exposure manner of the first network device based on the capability information of the second network device.

3. The method according to claim 1, wherein the congestion policy configuration information comprises: capability information and an operator policy of the second network device, and local configuration of the core network object; and
wherein the determining the first congestion information exposure manner of the first network device based on the congestion policy configuration information of the second network device comprises:
determining the first congestion information exposure manner of the first network device based on the capability information and the operator policy of the second network device, and the local configuration of the core network object.

4. The method according to claim 2 or 3, further comprising:
pre-configuring the capability information of the second network device on the core network object.

5. The method according to claim 2 or 3, further comprising:
obtaining the capability information of the second network device from a network entity.

6. The method according to claim 5, wherein the core network object is a policy control object; and wherein the network entity comprises at least one of a unified data management entity, a unified data repository entity, a network operation and maintenance system, an access and mobility management object, or a session management object.

7. The method according to claim 1, wherein the congestion policy configuration information comprises: capability information of the second network device, and
wherein the determining the first congestion information exposure manner of the first network device based on the congestion policy configuration information of the second network device comprises:
determining, based on the capability information of the second network device, at least one second congestion information exposure manner supported by the second network device; and
selecting one congestion information exposure manner from the at least one second congestion information exposure manner supported by the second network device, and determining the selected congestion information exposure manner as the first congestion information exposure manner of the first network device.

8. The method according to claim 7, wherein the capability information of the second network device indicates at least one of:
whether the second network device supports an explicit congestion notification;
whether the second network device comprises a capability of supporting congestion information reporting of a data plane; or
whether the second network device supports reporting the congestion information via a notification process.

9. The method according to claim 7, wherein the first information indicating the first congestion information exposure manner of the first network device comprises at least one of:
second information instructing the second network device to perform explicit congestion notification marking;
third information instructing the second network device to generate an uplink data packet comprising congestion information and transmit, via a data plane, the uplink data packet to a user plane object; or
fourth information instructing the second network device to report, via a notification path of a control plane, the congestion information.

10. The method according to claim 7, wherein based on the first information indicating the first congestion information exposure manner of the first network device comprises third information instructing the second network device to generate an uplink data packet comprising congestion information and transmit, via a data plane, the uplink data packet to a user plane object, the method further comprises:
transmitting an N4 message, wherein the N4 message comprises fifth information indicating a congestion information reporting manner of the user plane object.

11. The method according to claim 10, wherein the core network object is a policy control object; and the fifth information indicating the congestion information reporting manner of the user plane object comprises at least one of:
information instructing the user plane object to transmit, via an application program interface, the congestion information to a session management object, the session management object being configured to transmit the congestion information to the policy control object, the policy control object being configured to perform a network policy adjustment based on the congestion information or configured to transmit the congestion information to an application object;
information instructing the user plane object to transmit, via the application program interface, the congestion information to the application object; and
information instructing the user plane object to mark an explicit congestion notification of a data packet comprising the congestion information.

12. The method according to claim 1, wherein the core network object is a policy control object; and the transmitting a congestion information exposure subscription message of the first network device comprises:
transmitting the congestion information exposure subscription message of the first network device to a session management object to instruct the session management object to transmit the congestion information exposure subscription message of the first network device to an access and mobility management object, the access and mobility management object being configured to transmit the congestion information exposure subscription message of the first network device to the network device through an N2 message; or
transmitting the congestion information exposure subscription message of the first network device to an access and mobility management object to instruct the access and mobility management object to transmit the congestion information exposure manner of the first network device to the network device through an N2 message.

13. A network information exposure method, executable by a network device, and comprising:
obtaining a congestion information exposure subscription message of a first network device, the congestion information exposure subscription message of the first network device carrying information indicating a first congestion information exposure manner of the first network device, and the first congestion information exposure manner of the first network device being determined, based on receiving a congestion information exposure request, by a core network object based on congestion policy configuration information of the network device;
detecting that a network is congested; and
using the first congestion information exposure manner of the first network device to expose congestion information.

14. The method according to claim 13, wherein the using the first congestion information exposure manner of the first network device to expose congestion information comprises:
marking explicit congestion notification information in a data packet if the first congestion information exposure manner of the first network device comprises information instructing the network device to perform explicit congestion notification marking.

15. A network information exposure method, executable by a target network device, and the method comprising:
obtaining a congestion information exposure subscription message of a first network device, the congestion information exposure subscription message of the first network device carrying information indicating a first congestion information exposure manner of the first network device, and the first congestion information exposure manner of the first network device being determined, based on receiving a congestion information exposure request, by a core network object based on congestion policy configuration information of a network device;
determining, based on capability information of the target network device, whether the first congestion information exposure manner of the first network device is supported;
transmitting a rejection message if the first congestion information exposure manner of the first network device is not supported; and
receiving a congestion information exposure subscription message of a second network device, the congestion information exposure subscription message of the second network device carrying information indicating a second congestion information exposure manner of the second network device, the second congestion information exposure manner of the second network device being determined based on congestion policy configuration information of the target network device.

16. A network information exposure method, executable by a user plane function, and the method comprising:
receiving an N4 message, the N4 message carrying information indicating a congestion information reporting manner of the user plane object, the N4 message being transmitted after a core network object determines, based on receiving a congestion information exposure request, a first congestion information exposure manner of a first network device based on congestion policy configuration information of a second network device, and determines that first information indicating the first congestion information exposure manner of the first network device comprises third information instructing the second network device to generate an uplink data packet comprising congestion information and transmit, via a data plane, the uplink data packet to the user plane object;
receiving the congestion information; and
transmitting the congestion information by using the congestion information reporting manner of the user plane object.

17. A communication device, comprising:
one or more processors; and
a memory, configured to store one or more programs, the one or more programs, when executed by the one or more processors, enabling the communication device to implement the method according to any one of claims 1 to 12; or
the method according to claim 13 or 14; or
the method according to claim 15; or
the method according to claim 16.

18. A computer-readable storage medium, having a computer program stored thereon, and the computer program, when runs on a computer, enabling the computer to perform the method according to any one of claims 1 to 12; or
the method according to claim 13 or 14; or
the method according to claim 15; or
the method according to claim 16.

19. A computer program product, comprising computer instructions stored on a computer-readable storage medium, and the computer instructions, when executed, implementing method according to any one of claims 1 to 12; or
the method according to claim 13 or 14; or
the method according to claim 15; or
the method according to claim 16.
